# EUROPEAN PATENT SPECIFICATION

(11) **EP 1 724 152 B1**
(45) Date of publication and mention of the grant of the patent: **06.08.2008**
(21) Application number: 05010704.4
(22) Date of filing: 18.05.2005
(51) Int. Cl.: B60Q 7/00

(54) **Signal assembly**
Signalanordnung
Ensemble de signalisation

(43) Date of publication of application: 22.11.2006
(73) Proprietor: Wang, Shiunn-Terny, Taichung Hsien (TW)
(72) Inventor: Wang, Shiunn-Terny, Taichung Hsien (TW)
(74) Representative: Robba, Pierpaolo

(56) References cited:
- DE-U1-3202004 010 95
- US-A1- 2004 124 997
- US-A1- 2004 140 911

## Description

### FIELD OF THE INVENTION

The present invention relates to a signal assembly wherein the light stick can be separated from the legs and held by the users.

### BACKGROUND OF THE INVENTION

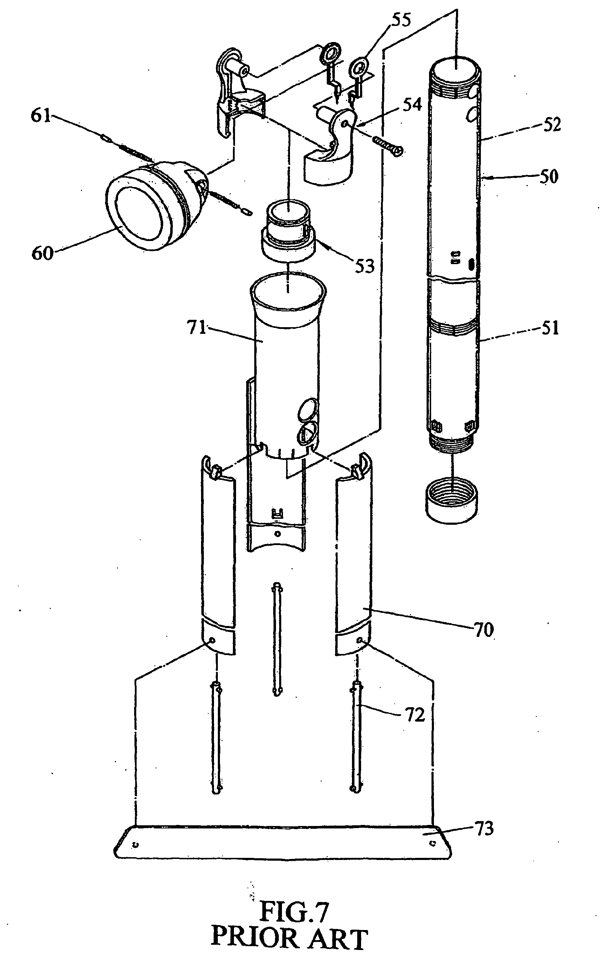

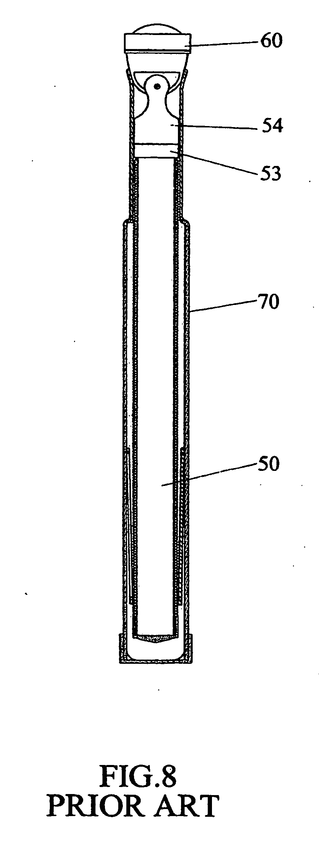

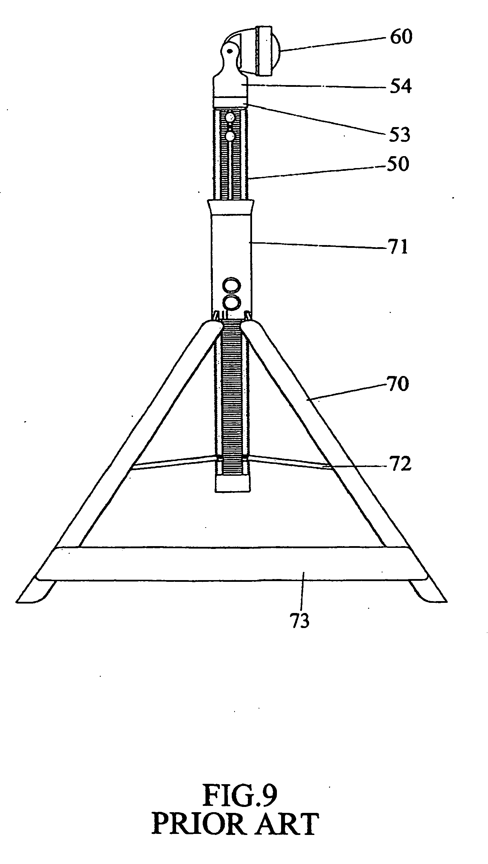

A conventional signal assembly is disclosed in Figs. 7-9, and generally includes a tube 50 which includes battery section 52 and a light bulb section 51, a sleeve 71 is slidably mounted to the tube 50 and three leg plates 70 are pivotably connected to the sleeve 71, three extension rods 72 are pivotably connected between the tube 50 and the three leg plates 70, and a light device 60 is pivotably connected between two lugs of a frame 54 which is connected to a base 53 which is connected to a top of the tube 50. Two conductive members 55 are connected to the two lugs of the frame 54 and the light device 60 is electrically connected to the conductive member 55 by two conductive pins 61. The three leg plates 70 can be pivoted and cooperated with a transverse plate 73 to form a warning triangular frame as shown in Fig. 9 and the light device 60 provide illumination. The conventional signal assembly is mainly focused on a stationary warning purpose and is too big to be held by the users when needed.

Stationary signal assemblies of this kind are disclosed, for insistance in DE 20 2004010953 U, US 2004/140911, US 2004/124997.

The present invention intends to provide a signal assembly which includes a light stick that can be separated from the leg plates and can be held by the users conveniently.

### SUMMARY OF THE INVENTION

The present invention relates to a signal assembly which comprises a light device connected to a light stick and three connection hooks extend from an outer periphery of the light stick. A first connection assembly is mounted to the light stick and includes a first ring and a second ring which is mounted to the first ring. The first ring has a first flange extending outward from a first end thereof and three notches are defined through the first flange. The second ring has three openings defined in a lower end thereof. The connection hooks are engaged with the three notches and hooked with the first flange by rotating the light stick relative to the first ring. Three leg plates each have a first end pivotably engaged with the three openings in the second ring. A second connection assembly is slidably mounted to the light stick and three stretch rods are pivotably connected between the three leg plates and the second connection assembly.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the signal assembly of the present invention;
Fig. 2 is an exploded view to show the signal assembly of the present invention;
Fig. 3 is a cross sectional view to show the signal assembly of the present invention;
Fig. 4 is a cross sectional view to show the signal assembly of the present invention, wherein the leg plates are opened wide;
Fig. 5 is a perspective view to show the signal assembly of the present invention with the leg plates opened wide;
Fig. 6 shows that the light stick is independently used;
Fig. 7 is an exploded view to show a conventional signal assembly;
Fig. 8 is a cross sectional view of the conventional signal assembly, and
Fig. 9 shows that the leg plates of the conventional signal assembly are opened wide.

### DETAILED DESCRIPTION OF THE PREFERRED EMBODIMENT

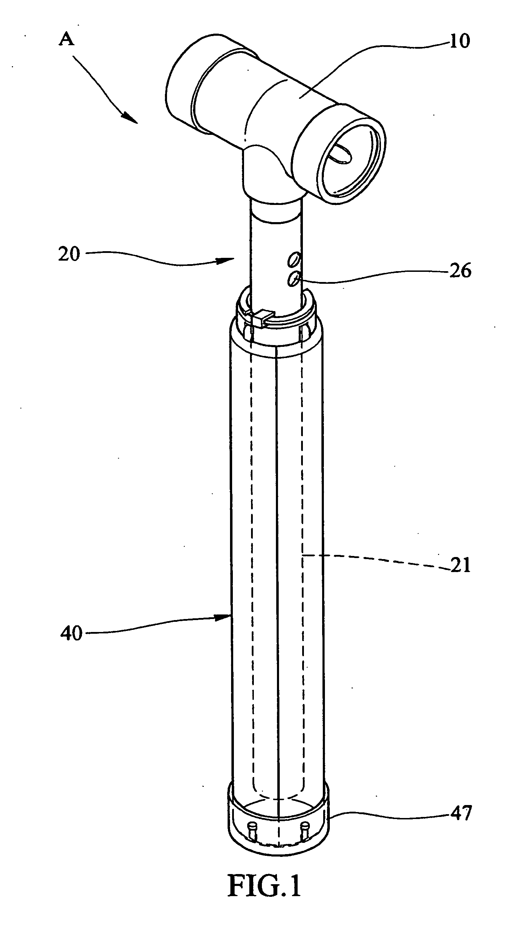

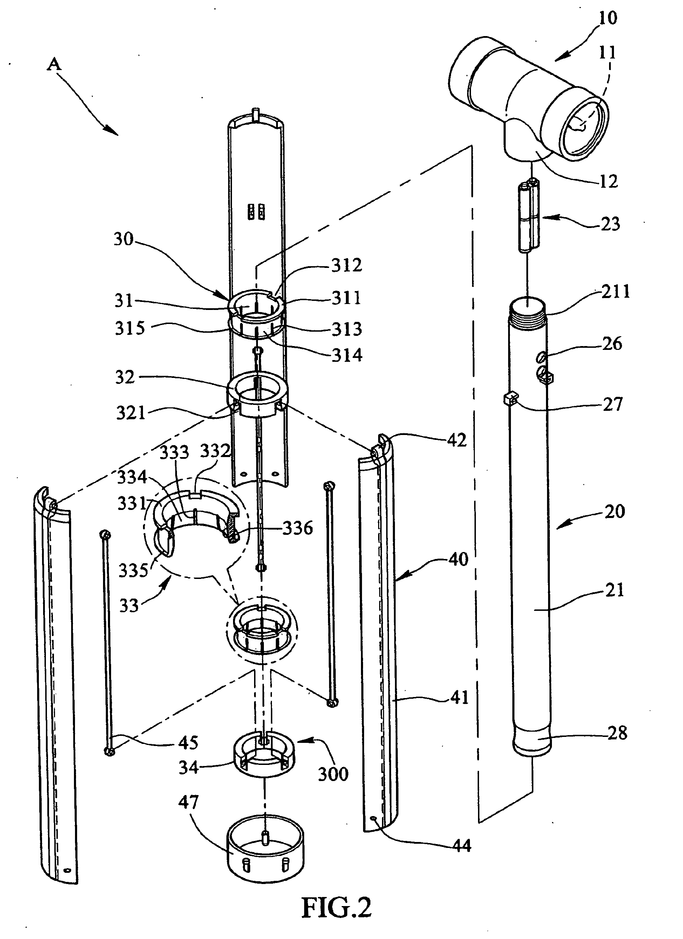

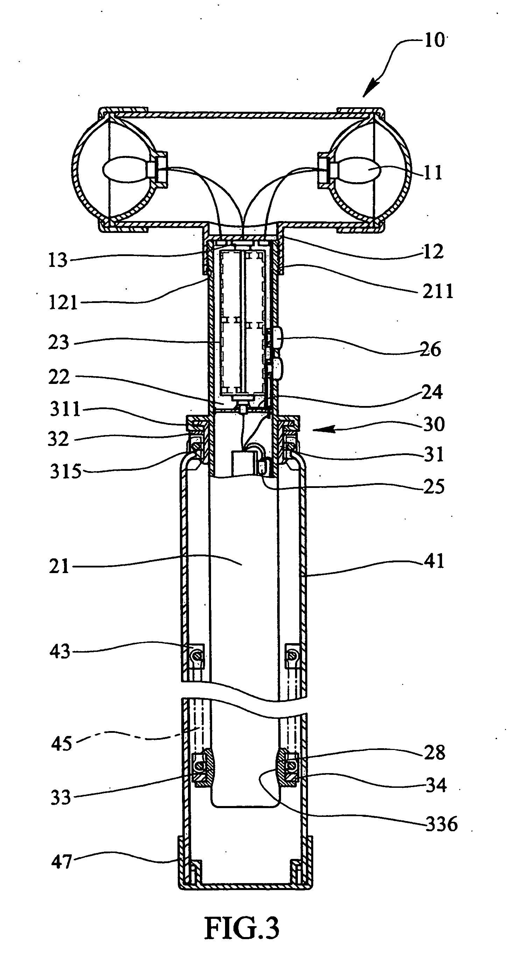

Referring to Figs. 1 to 3, the signal assembly "A" of the present invention comprises a light device 10 that is a tubular member with two light bulbs 11 on two ends thereof and a connection neck 12 extends from a mediate portion of the light device 10. A light stick 20 is a transparent or semi-transparent tube 21 and has a threaded portion 211 on a first end thereof so that the connection neck 12 is threadedly connected with the threaded portion 211 of the light stick 20. A battery pack 23 and a light bulb 25 are received in an interior 22 of the light stick 20. A control circuit board 24 is electrically connected to the battery pack 23 and a light bulb 25. The other end of the battery pack 23 is connected to a conductive plate 13 in the connection neck 12 and the two light bulbs 11 are electrically connected to the conductive plate 13. A switch assembly 26 is electrically connected to the control circuit board 24 and exposed from the outer periphery of the light stick 20 so that the user may optionally operate the light device 10 and/or the light bulb 25 in the light stick 20. Three connection hooks 27 extend from an outer periphery of the light stick 20.

A first connection assembly 30 is mounted to the light stick 20 and includes a first ring 31 and a second ring 32. The first ring 31 has a first flange 311 extending outward from a first end thereof and three notches 312 are defined through the first flange 311. A plurality of slits 313 are defined in the first ring 31 so as to form a plurality of flexible studs separated by the slits 313 such that the first ring 31 can be squeezed into a central hole of the second ring 32. A second flange 315 extends outward from a second end of the first ring 31.

The second ring 32 has three openings 321 defined in a lower end thereof. The light stick 20 extends through the first and second rings 31, 32 and the connection hooks 27 are engaged with the three notches 312 and hooked with the first flange 311 by rotating the light stick 20 relative to the first ring 31. In other words, the light stick 21 is able to separated from the first connection assembly 30 by operating the light stick 20 in reverse direction.

Three leg plates 40 each are an elongate and curve plate and have a protrusion 42 extending from an inside of a first end of each of the three leg plates 40 and the three protrusions 42 are engaged with the three openings 321 of the second ring 32. The second flange 315 extending outward from the second end of the first ring 31 supports and restricts the protrusion 42 within the opening 321.

A second connection assembly 300 mounted to a groove 28 defined in the outer periphery of a second end of the light stick 20, and includes a third ring 33 and a fourth ring 34 which is identical with the second ring 32 and is arranged to be up-side-down to let the openings face the third ring 33. The third ring 33 has a plurality of engaging bosses 336 extending from an inner periphery thereof and the engaging bosses 336 are engaged with the groove 28 of the light stick 20. Three stretch rods 45 are pivotably connected between three connection studs 43 in the inner side of the three leg plates 40 and the second connection assembly 300. The third ring 33 includes a third flange 331 extending from a first end thereof and three notches 332 are defined in the third flange 331 so as to receive the stretch rods 45 when the leg plates 40 are not opened. A fourth flange 335 extends outward from a second end of the third ring 33. The third ring 33 is engaged with a central hole of the fourth ring 34 and three respective ends of the three stretch rods 45 are respectively engaged with the openings in the fourth ring 34 and restricted by the fourth flange 335.

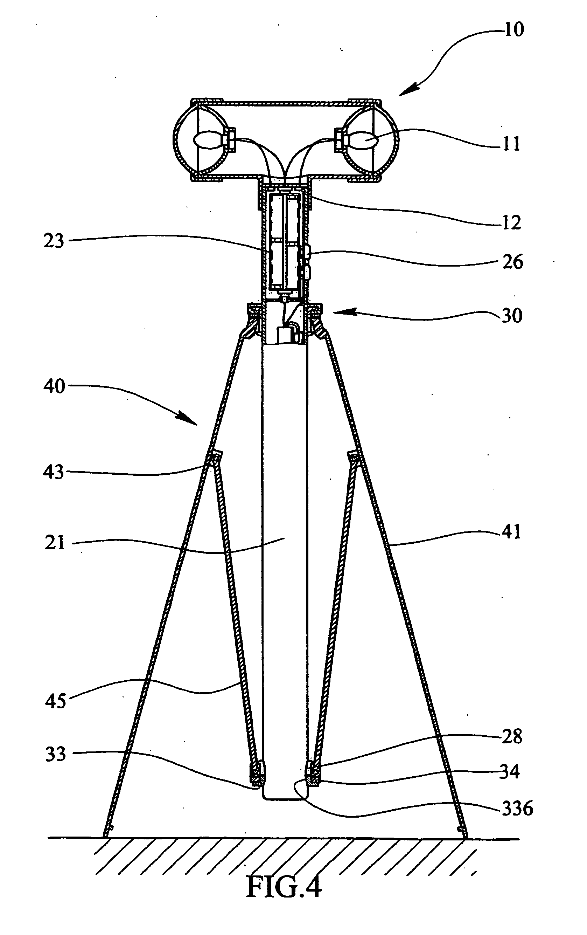

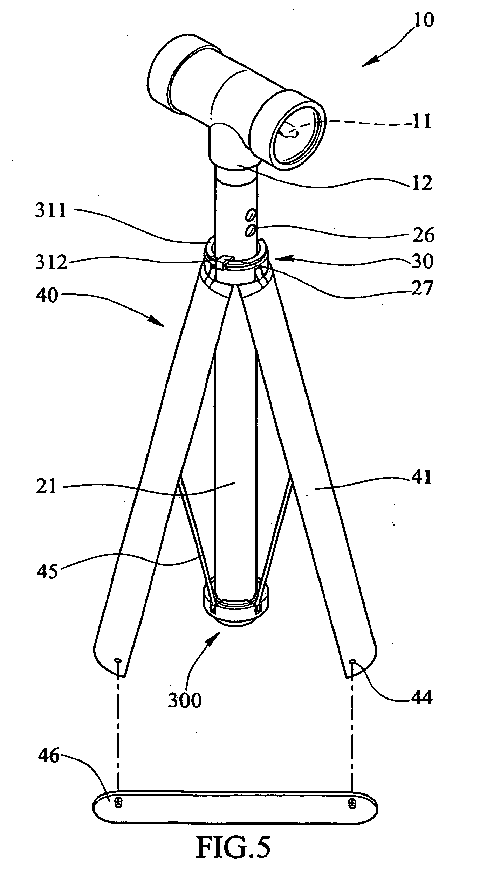

As shown in Figs. 4 and 5, the three leg plates 31 can be pivoted outward about the first connection assembly 30 and the three stretch rods 45 are pivoted outward to provide a stable structure. A transverse plate 46 can be fixed between any two adjacent leg plates 40 by proper connection members which connect the two ends of the transverse plate 46 to the two connection holes 44 in the leg plates 40. The transverse plate 46 and the two leg plates 40 forms a triangular warning sign.

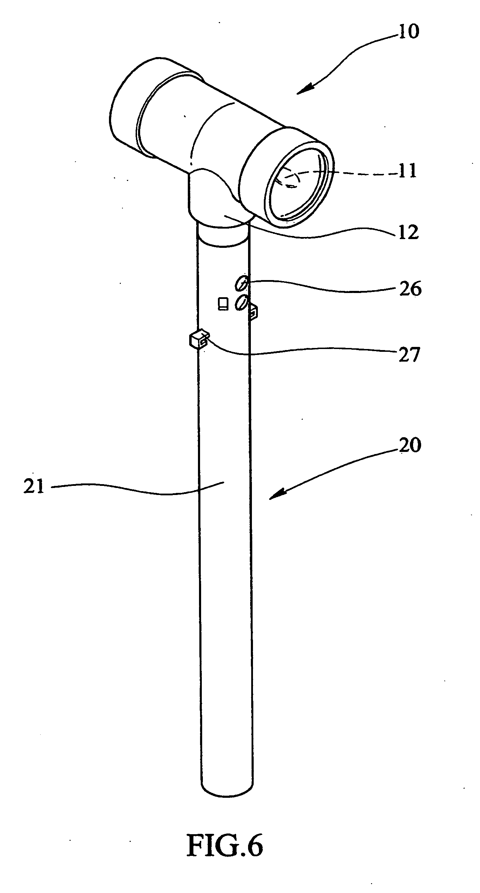

As shown in Fig. 6, the light stick 20 can be easily separated from the first and second connection assemblies 30, 300 and the leg plates 40 by rotating it relative to the first ring 31 and removing the connection hooks 27 from the notches 312. The light stick 20 can be easily held by the users.

While we have shown and described the embodiment in accordance with the present invention, it should be clear to those skilled in the art that further embodiments may be made without departing from the scope of the present invention as defined in the appended claims.

## Claims

1. A signal assembly (A) comprising:
a light device (10);
a light stick (20) having a first end connected to the light device (10) a first connection assembly (30) mounted to the light stick (20) and including a first ring (31) and a second ring (32);
the second ring (32) having three openings (321) defined in a lower end thereof;
three leg plates (40) each having a first end pivotably engaged with the three openings (321) in the second ring (32) and a second connection assembly (300) mounted to the light stick (20) and three stretch rods (45) pivotably connected between the three leg plates (40) and the second connection assembly (300);
**characterized in that** it further comprises
three connection hooks (27) extending from an outer periphery of the light stick (20);
the first ring (31) having a first flange (311) extending outward from a first end thereof and three notches (312) defined through the first flange,
the first ring (31) being inserted in a central hole of the second ring (32), the connection hooks (27) being removably engaged with the three notches (312) and hooked with the first flange (311) by rotating the light stick (20) relative to the first ring (31).

2. The assembly (A) as claimed in claim 1, wherein a protrusion (42) extends from an inside of the first end of each of the three leg plates (40) and the three protrusions (42), are engaged with the three openings (321) of the second ring (32), a second flange (315) extends outward from a second end of the first ring (31) and supports and restricts the protrusion within the opening.

3. The assembly (A) as claimed in claim 1, wherein a plurality of slits (313) defined in the first ring (31) so as to form a plurality of flexible studs separated by the slits.

4. The assembly (A) as claimed in claim 1, wherein a battery pack (23) and a light bulb (25) are received in an interior of the light stick (20), a control circuit board (24) is electrically connected to the battery pack and a light bulb, a switch assembly (26) is electrically connected to the control circuit board and exposed from the outer periphery of the light stick.

5. The assembly (A) as claimed in claim 1, wherein the light device (10) includes two light bulbs (11) on two ends thereof and a connection neck (12) extends from a mediate portion of the light device, the light stick (20) has a threaded portion (211) on the first end thereof so that the connection neck (12) is threadedly connected with the threaded portion (211) of the light stick (20).

6. The assembly (A) as claimed in claim 1, wherein the second connection assembly (300) includes a third ring (33) and a fourth ring (34), the third ring (33) includes a third flange (331) extending from a first end thereof and three notches (332) are defined in the third flange so as to receive the stretch rods (45) when the leg plates (40) are not opened, a fourth flange (335) extends outward from a second end of the third ring (33), the fourth ring (34) includes three openings which face the third ring, the third ring (33) is engaged with a central hole of the fourth ring (34) and three respective ends of the three stretch rods (45) are respectively engaged with the openings in the fourth ring (34) and restricted by the fourth flange (335).

7. The assembly (A) as claimed in claim 6, wherein the third ring (33) has a plurality of engaging bosses (336) extending from an inner periphery thereof and the engaging bosses (336) are engaged with a groove (28) defined in the outer periphery of a second end of the light stick (20).

## Patentansprüche

1. Eine Signalanordnung (A), die Folgendes umfasst:
eine Leuchteinrichtung (10);
einen Leuchtenstab (20) mit einem ersten, mit der Leuchteinrichtung (10) verbundenen Ende
eine erste, an dem Leuchtenstab (20) angeordnete Verbindungsbaugruppe (30), die einen ersten Ring (31) und einen zweiten Ring (32) einschließt;
wobei der zweite Ring (32) drei, in seinem unteren Ende ausgebildete Öffnungen (321) besitzt;
drei Beinschienen (40), deren jeweils erstes Ende gelenkig mit den drei Öffnungen (321) im zweiten Ring (32) verbunden ist, sowie eine zweite, an dem Leuchtenstab (20) montierte Verbindungsbaugruppe (300) und drei zwischen den drei Beinschienen (40) und der zweiten Verbindungsbaugruppe (300) gelenkig eingefügte Dehnstangen (45);
**dadurch gekennzeichnet, dass** sie weiterhin Folgendes aufweist:
drei aus dem Außenmantel des Leuchtenstabs (20) hervorstehende Verbindungshaken (27);
der erste Ring (31) hat einen ersten Flansch (311), der sich von seinem ersten Ende aus nach außen erstreckt und drei im ersten Flansch ausgebildete Einschnitte (312);
der erste Ring (31) in eine Zentralbohrung des zweiten Rings (32) eingesetzt wird, wobei die Verbindungshaken (27) lösbar mit den drei Einschnitten (312) gefügt sind und durch Drehung des Leuchtenstabs (20) relativ zum ersten Ring (31) in den ersten Flansch (311) eingehakt werden.

2. Anordnung (A) nach Anspruch 1,
wobei aus der Innenseite des ersten Endes der drei Beinschienen (40) ein Vorsprung (42) ragt und die drei Vorsprünge (42) in den drei Öffnungen (321) des zweiten Rings (32) sitzen sowie ein zweiter Flansch (315) von einem zweiten Ende des ersten Rings (31) nach außen vorsteht und den Vorsprung in der Öffnung abstützt und zurückhält.

3. Anordnung (A) nach Anspruch 1,
wobei eine Vielzahl von in dem ersten Ring (31) ausgebildeten Schlitzen (313) eine Vielzahl von durch die Schlitze getrennten flexiblen Klauen bildet.

4. Anordnung (A) nach Anspruch 1,
wobei ein Batteriensatz (23) und ein Leuchtkörper (25) im Inneren des Leuchtenstabs (20) untergebracht sind, eine Steuerplatine (24) elektrisch an den Batteriensatz und einen Leuchtkörper angeschlossen ist und ein Schaltelement (26) elektrisch mit der Steuerplatine verbunden und von der Außenfläche des Leuchtenstabs aus zugänglich ist.

5. Anordnung (A) nach Anspruch 1,
wobei die Leuchteinrichtung (10) zwei Leuchtkörper (11) an ihren beiden Enden einschließt und einen Verbindungshals (12) sich im mittleren Bereich der Leuchteinrichtung befindet und der Leuchtenstab (20) an seinem ersten Ende einen Gewindeabschnitt (211) besitzt, so dass der Verbindungshals (12) durch ein Gewinde mit dem Gewindeabschnitt (211) des Leuchtenstabs (20) verbunden ist.

6. Anordnung (A) nach Anspruch 1,
wobei die zweite Verbindungsbaugruppe (300) einen dritten Ring (33) und einen vierten Ring (34) einschließt und der dritte Ring (33) einen von einem ersten Ende ausgehenden dritten Flansch (331) beinhaltet und im dritten Flansch drei Aussparungen (332) ausgebildet sind, um die Dehnstangen (45) aufzunehmen, wenn die Beinschienen (40) nicht geöffnet sind und sich ein vierter Flansch (335) von einem zweiten Ende des dritten Rings (33) nach außen erstreckt und der vierte Ring (34) drei Öffnungen einschließt, die dem dritten Ring gegenüberliegen und der dritte Ring (33) in einer Mittelbohrung des vierten Rings (34) aufgenommen ist und jeweils drei Enden der drei Dehnstangen (45) jeweils mit den Öffnungen im vierten Ring (34) in Eingriff sind und vom vierten Flansch (335) gehalten werden.

7. Anordnung (A) nach Anspruch 6,
wobei der dritte Ring (33) eine Vielzahl von Fügenasen (336) besitzt, die sich von seiner Innenwandung aus erstrecken und die Fügenasen (336) mit einer Nut (28) zusammenwirken, die am Außenumfang des zweiten Endes des Leuchtenstabs (20) ausgebildet ist.

## Revendications

1. Ensemble de signalisation (A) comprenant:
- un dispositif lumineux (10);
- un bâton lumineux (20) ayant une première extrémité connectée aux dispositif lumineux (10);
- un premier ensemble de connexion (30) monté sur le bâton lumineux (20) et comprenant un premier anneau (31) et un deuxième anneau (32), le deuxième anneau (32) ayant trois ouvertures (321) prévues sur son extrémité inférieure;
- trois pieds (40), chaque pied ayant une première extrémité engagée de manière pivotante avec les trois ouvertures (321) du deuxième anneau (32); et
- un deuxième ensemble de connexion (300) monté sur le bâton lumineux (20) et
- trois tiges d'extension (45) connectées de manière pivotante entre le trois pieds (40) et le deuxième ensemble de connexion (300);
**caractérisé en ce qu'**il comprend en outre trois crochets de connexion (27) s'étendant à partir de la périphérie externe du bâton lumineux (20), le premier anneau (31) ayant une première bride (311) qui s'étend vers l'extérieur à partir d'une première extrémité de ce premier anneau et trois encoches (312) prévues sur la bride, le premier anneau étant inséré dans un trou central du deuxième anneau (32), les crochets de connexion (27) étant engagés de manière amovible avec les trois encoches (312) et étant accrochés à la première bride (311) au moyen d'une rotation du bâton lumineux (20) par rapport au premier anneau (31).

2. Ensemble (A) selon la revendication 1, dans lequel une saillie (42) s'étend à partir du coté interne de la première extrémité de chacun des trois pieds (40), les trois saillies (42) s'engagent avec les trois ouvertures (321) du deuxième anneau (32) et une deuxième bride (315) s'étend vers l'extérieur à partir d'une deuxième extrémité du premier anneau (31), supportant et restreignant la saillie à l'intérieur de l'ouverture.

3. Ensemble (A) selon la revendication 1, dans lequel une pluralité de fentes (313) est prévue dans le premier anneau (31), de façon à former une pluralité de colonnettes flexibles séparées par les fentes.

4. Ensemble (A) selon la revendication 1, dans lequel un paquet de batteries (23) et une ampoule (25) sont accueillis à l'intérieur du bâton lumineux (20), un circuit de contrôle (24) est électriquement connecté au paquet de batteries et à l'ampoule et un ensemble-interrupteur (26) est électriquement connecté au circuit de contrôle et exposé à travers la périphérie externe du bâton lumineux.

5. Ensemble (A) selon la revendication 1, dans lequel le dispositif lumineux (10) comprend deux ampoules (11) à ses deux extrémités, une gorge de connexion (12) s'étend à partir d'une portion médiane du dispositif lumineux et le bâton lumineux (20) comprend une portion filetée (211) sur sa première extrémité, de façon à ce que la gorge de connexion (12) est connectée par connexion filetée à la portion filetée (211) du bâton lumineux (20).

6. Ensemble (A) selon la revendication 1, dans lequel le deuxième ensemble de connexion (300) comprend un troisième anneau (33) et un quatrième anneau (34), le troisième anneau (33) comprend une troisième bride (331) s'étendant à partir d'une première extrémité de ce troisième anneau et trois encoches (332) sont prévues dans la troisième bride, de façon à accueillir les tiges d'extension (45) alors que les pieds (40) ne sont pas ouverts, une quatrième bride (335) s'étend vers l'extérieur à partir d'une deuxième extrémité du troisième anneau (33), le quatrième anneau (34) comprend trois ouvertures qui sont orientées vers le troisième anneau, le troisième anneau (33) s'engage avec un trou central du quatrième anneau (34) et trois respectives extrémités des trois tiges d'extension (45) sont engagées respectivement avec les ouvertures dans le quatrième anneau (34) et restreintes par la quatrième bride (335).

7. Ensemble (A) selon la revendication 6, dans lequel le troisième anneau (33) est pourvu d'une pluralité de protubérances d'engagement (336) s'étendant à partir d'une périphérie interne de ce troisième anneau et le protubérances d'engagement (336) sont engagées avec une rainure (28) prévue dans la périphérie externe de la deuxième extrémité du bâton lumineux (20).
